(19) Europäisches Patentamt
European Patent Office
Office européen des brevets

(11) **EP 3 027 436 B1**

(12) **EUROPÄISCHE PATENTSCHRIFT**

(45) Veröffentlichungstag und Bekanntmachung des Hinweises auf die Patenterteilung:
**19.05.2021 Patentblatt 2021/20**

(21) Anmeldenummer: **14741291.0**

(22) Anmeldetag: **18.07.2014**

(51) Int Cl.:
**B60C 23/06** (2006.01)

(86) Internationale Anmeldenummer:
**PCT/EP2014/065476**

(87) Internationale Veröffentlichungsnummer:
**WO 2015/014635 (05.02.2015 Gazette 2015/05)**

(54) **VERFAHREN UND SYSTEM ZUR BESTIMMUNG EINES DRUCKVERHÄLTNISSES ZWISCHEN EINEM SOLLREIFENDRUCK UND EINEM AKTUELLEN REIFENDRUCK FÜR EINEN REIFEN EINES FAHRZEUGS**

METHOD AND SYSTEM FOR DETERMINING A PRESSURE RATIO BETWEEN A TARGET TIRE PRESSURE AND A CURRENT TIRE PRESSURE FOR A TIRE OF A VEHICLE

PROCÉDÉ ET SYSTÈME DE DÉTERMINATION D'UN RAPPORT DE PRESSION ENTRE UNE PRESSION DE GONFLAGE IDÉALE ET UNE PRESSION DE GONFLAGE EFFECTIVE POUR UN PNEU D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.08.2013 DE 102013108283**

(43) Veröffentlichungstag der Anmeldung:
**08.06.2016 Patentblatt 2016/23**

(73) Patentinhaber:
• **Volkswagen Aktiengesellschaft**
**38440 Wolfsburg (DE)**
• **Scania CV AB**
**151 87 Södertälje (SE)**

(72) Erfinder:
• **STEINMEYER, Simon**
**38102 Braunschweig (DE)**
• **MEINECKE, Marc-Michael**
**38524 Sassenburg (DE)**
• **DEGERMAN, Pär**
**S-61336 Oxelösund (SE)**
• **DEEG, Carsten**
**10587 Berlin (DE)**

(74) Vertreter: **Sticht, Andreas**
**Kraus & Weisert**
**Patentanwälte PartGmbB**
**Thomas-Wimmer-Ring 15**
**80539 München (DE)**

(56) Entgegenhaltungen:
**JP-A- 2010 076 702    US-A1- 2003 121 319**

**EP 3 027 436 B1**

**Beschreibung**

Die vorliegende Erfindung betrifft ein Verfahren und ein System, um ein Druckverhältnis zwischen einem Sollreifendruck bzw. optimalen Reifendruck und einem aktuellen Reifendruck für einen Reifen eines Fahrzeugs zu bestimmen.

Die US 2003/0121319 A1 offenbart ein Schätzen eines Reifendruckzustands. Dabei wird eine Radlast bestimmt, um abhängig davon einen Zusammenhang zwischen einem dynamischen Reifenradius und einem Reifendruck zu ermitteln. Der dynamische Reifenradius wird berechnet, um abhängig von dem ermittelten Zusammenhang den Reifendruck zu bestimmen.

Die JP 2010 076702 A beschreibt ein Verfahren, bei welchem der Reifendruck abhängig von der Radlast und dem dynamischen Reifenradius bestimmt wird.

Die DE 10 2009 057 578 A1 offenbart die Untersuchung einer Radlastverteilung einer Mehrzahl von Reifen eines Fahrzeugs anhand einer Latschlänge und eines Reifendrucks jedes Reifens.

Die DE 10 2009 057 579 A1 beschreibt die Ermittlung eines Sollreifendrucks anhand eines Istwerts und eines Sollwerts eines Latsch des Reifens.

Die DE 103 52 539 B4 offenbart die Überwachung eines luftbereiften Fahrzeugs mit Hilfe eines Verformungssensors.

Der Rollwiderstand eines Fahrzeugs bestimmt wesentlich die Energie, welche das Fahrzeug zum Bewältigen einer Fahrstrecke benötigt. Bei Personenwagen müssen ungefähr 20 % der Energie eingesetzt werden, um den Rollwiderstand auf Autobahnen zu überwinden. Im städtischen Bereich erhöht sich dieser Prozentsatz auf 40 %. Bei Lastkraftwagen ist dieser Prozentsatz noch höher. Auf Autobahnen sind bei Lastkraftwagen 66 % des Energieverbrauchs auf die Überwindung des Rollwiderstands zurückzuführen. Daher könnte eine Verringerung des Rollwiderstands um 3 % den gesamten Energieverbrauch bei Lastkraftwagen auf Autobahnen um 2 % reduzieren. Ein weiteres Kriterium für den optimalen Reifendruck sind Fahrstabilität und damit die Sicherheit des Fahrers sowie die Sicherheit aller anderen Verkehrsteilnehmer.

Daher stellt sich die vorliegende Erfindung die Aufgabe, einen Hinweis für einen Fahrer eines Fahrzeugs bereitzustellen, mittels welchem ein optimaler Reifendruck eingestellt werden kann.

Erfindungsgemäß wird diese Aufgabe durch ein Verfahren zur Bestimmung eines Druckverhältnisses zwischen einem Sollreifendruck und einem aktuellen Reifendruck nach Anspruch 1 und durch ein System zur Bestimmung eines Druckverhältnisses zwischen einem Sollreifendruck und einem aktuellen Reifendruck nach Anspruch 8 gelöst. Die abhängigen Ansprüche definieren bevorzugte und vorteilhafte Ausführungsformen der vorliegenden Erfindung.

Im Rahmen der vorliegenden Erfindung wird ein Verfahren zur Bestimmung eines Druckverhältnisses zwischen einem Sollreifendruck bzw. optimalen Reifendruck und einem aktuellen Reifendruck für einen Reifen eines Fahrzeugs bereitgestellt. Dabei umfasst das erfindungsgemäße Verfahren folgende Schritte:

- Bestimmen einer Radlast, welche hauptsächlich aufgrund der Beladung des Fahrzeugs auf den Reifen einwirkt.

- Automatisches Ermitteln eines dynamischen Reifenradius des Reifens. Dabei wird unter einem dynamischen Reifenradius derjenige Radius des Reifens verstanden, welchen der Reifen bei einer Geradeausfahrt des Fahrzeugs aufweist. Der dynamische Reifenradius kann beispielsweise über den Abrollumfang des Reifens bestimmt werden. Der Abrollumfang entspricht dabei der Strecke, welche der Reifen bei einer Umdrehung schlupffrei zurücklegt. Der Abrollumfang kann beispielsweise aus dem Quotienten der vom Fahrzeug zurückgelegten Fahrstrecke geteilt durch die Anzahl der Umdrehungen des Reifens berechnet werden.

- Automatisches Bestimmen des Druckverhältnisses in Abhängigkeit von der Radlast und von dem dynamischen Reifenradius.

Wenn das bestimmte Druckverhältnis einen Wert größer als 1 aufweist, ist der aktuelle Reifendruck im jeweiligen Reifen zu gering. Dagegen gilt, wenn das bestimmte Druckverhältnis einen Wert kleiner als 1 aufweist, dass der aktuelle Reifendruck im jeweiligen Reifen zu groß ist. Je mehr der Wert des bestimmten Druckverhältnisses von 1 abweicht, umso mehr weicht dabei der aktuelle Reifendruck im jeweiligen Reifen vom Sollreifendruck ab. Mit anderen Worten gibt das bestimmte Druckverhältnis dem Fahrer zum einen einen Hinweis, ob der aktuelle Reifendruck des jeweiligen Reifens zu hoch oder zu niedrig ist, und zum anderen einen Hinweis, um welchen Prozentsatz der aktuelle Reifendruck vom Sollreifendruck abweicht.

Das Bestimmen des Druckverhältnisses erfolgt dabei insbesondere in Abhängigkeit von einer Konstante des jeweiligen Reifens, mit welcher ein Sollverhältnis zwischen dem dynamischen Reifenradius und einem unbelasteten Reifenradius definiert wird. Mit anderen Worten ist diese Reifenkonstante ein Applizierungsparameter, welcher für jeden Reifen (d.h. jeden Reifentyp) fest vorgegeben wird und sich über die Lebenszeit des Reifens nicht verändert. Der unbelastete Reifenradius bestimmt den Radius des Reifens im unbelasteten Zustand des Reifens. Der unbelastete Reifenradius kann beispielsweise bestimmt werden, wenn der Reifen auf dem Boden liegt, so dass seine Reifenaufstandsfläche keinen Kontakt zum Boden aufweist.

Mit Kenntnis dieser Reifenkonstante kann das Druckverhältnis durch die folgende Gleichung (1) berechnet werden:

$$p_{Rel} = (1 - c_{Actual}) / (1 - c_{Ideal}) \qquad (1)$$

Dabei entspricht $p_{Rel}$ dem zu bestimmenden Druckverhältnis, $c_{Actual}$ einem Quotienten aus dem dynamischen Reifenradius geteilt durch den unbelasteten Reifenradius und $c_{Ideal}$ der vorgegebenen Reifenkonstante.

Gemäß einer bevorzugten erfindungsgemäßen Ausführungsform wird zusätzlich der aktuelle Reifendruck des Reifens bestimmt. Dies ist beispielsweise mit einem innerhalb des Reifens vorhandenen Drucksensor möglich, aber auch eine manuelle Bestimmung des aktuellen Reifendrucks ist denkbar. Indem das bestimmte Druckverhältnis mit dem aktuellen Reifendruck multipliziert wird, kann der Sollreifendruck des jeweiligen Reifens bestimmt werden. Eine weitere Möglichkeit der Bestimmung des aktuellen Reifendrucks besteht darin, den aktuellen Reifendruck mit Hilfe einer Reifensteifigkeitsfunktion mit abzuschätzen, wie es im Weiteren im Detail erläutert wird.

Diese Ausführungsform gibt dem Fahrer des Fahrzeugs vorteilhafterweise in Form des Sollreifendrucks einen exakten Hinweis, auf welchen Reifendruck der jeweilige Reifen einzustellen ist.

Der dynamische Reifenradius kann erfindungsgemäß beispielsweise bestimmt werden, indem die von dem Fahrzeug zurückgelegte Entfernung anhand von GPS-Daten bestimmt wird und diese zurückgelegte Entfernung dann durch die Anzahl von Umdrehungen des jeweiligen Reifens geteilt wird, welche während der Bewältigung dieser Entfernung von dem jeweiligen Reifen erfasst wurden. Die Anzahl der Umdrehungen des jeweiligen Reifens kann dabei beispielsweise anhand von so genannten "Wheel Ticks" bestimmt werden, wobei beispielsweise 100 Wheel Ticks pro Reifenumdrehung erfasst werden. Ein Wheel Tick entspricht dabei einem Messsignal, welches jeweils von einem Sensor erfasst wird, wenn sich der Reifen um einen vorbestimmten Drehwinkel gedreht hat.

Wie bereits vorab in der Definition des dynamischen Reifenradius beschrieben ist, kann der dynamische Reifenradius nur genau bestimmt werden, wenn der Reifen keinen Schlupf aufweist. Aus diesem Grund sollten bei der Bestimmung des dynamischen Reifenradius dynamische Fahrsituationen des Fahrzeugs (beispielsweise hartes Bremsen des Fahrzeugs, Beschleunigung mit durchdrehenden Reifen) ausgeklammert werden. Die Erkennung von solchen dynamischen Fahrsituationen kann beispielsweise mittels Beschleunigungssensoren oder durch Auswertung von Bremssignalen, ABS-Signalen oder ESP-Signalen erfolgen, so dass der dynamische Reifenradius nur in Fahrsituationen bestimmt wird, in welchen der Reifen keinen Schlupf aufweist. Darüber hinaus kann ein Kalman-Filter eingesetzt werden, um die über ein vorbestimmtes Intervall erfassten Wheel Ticks mit erwarteten Wheel Ticks zu vergleichen, um Ausreißer zu erkennen und um diese bei der Bestimmung des dynamischen Reifenradius nicht zu berücksichtigen.

Darüber hinaus kann der dynamische Reifenradius des Reifens des Fahrzeugs abhängig von einer Gierrate $\dot{\Psi}$ des Fahrzeugs, einer Drehgeschwindigkeit $DG_1$ des Reifens, einer weiteren Drehgeschwindigkeit $DG_2$ eines weiteren Reifens des Fahrzeugs und einem Abstand s zwischen dem Reifen und dem weiteren Reifen gemäß folgender Gleichung (2) ermittelt werden, wie es in DE 10 2006 020 490 A1 beschrieben ist..

$$r_{dyn} = \frac{1}{2\pi} \times \frac{\dot{\Psi} \times s}{DG_2 \times X_1 - DG_1} \qquad (2)$$

Dabei gibt $X_1$ ein Umfangsverhältnis an, welches mit Hilfe der folgenden Gleichung (3) bei einer Geradeausfahrt des Fahrzeugs aus einem zeitlichen Integral der ersten Drehgeschwindigkeit und einem zeitlichen integral der zweiten Drehgeschwindigkeit berechnet werden kann.

$$X_1 = \frac{\int DG_1}{\int DG_2} \qquad (3)$$

Erfindungsgemäß kann auch eine Reifensteifigkeit bestimmt werden. Bei Kenntnis der Reifensteifigkeit, d.h. einem Verhältnis zwischen einer Differenz oder einem Abstand zwischen dem unbelasteten Reifenradius und dem dynamischen Reifenradius und der Radlast für den jeweiligen Reifen, kann über die Radlast die Differenz bestimmt werden. Dadurch kann der unbelastete Reifenradius aus der Summe aus dem dynamischen Reifenradius und dieser Differenz berechnet werden.

Die Bestimmung der Reifensteifigkeit bietet somit eine Möglichkeit, den unbelasteten Reifenradius jederzeit (d.h. ohne eine direkte Messung des unbelasteten Reifenradius) zu bestimmen. Eine solche Bestimmung des unbelasteten Reifenradius ist in der Regel genauer, als beispielsweise ein Schätzwert oder Messwert für den unbelasteten Reifenradius, welcher anhand von Messungen am stehenden Fahrzeug ermittelt wird.

Erfindungsgemäß kann nun das Druckverhältnis $p_{rel}$ oder der Sollreifendruck $p_{Ideal}$ für die aktuelle Radlast für jeden Reifen des Fahrzeugs bestimmt und mit dem aktuellen Reifendruck des jeweiligen Reifens verglichen werden. Beispielsweise können diese beiden Werte (d.h. der Sollreifendruck und der aktuelle Reifendruck) über eine entsprechende Schnittstelle dem Fahrer des Fahrzeugs übermittelt werden. Zur Motivation des Fahrers, den aktuellen Reifendruck dem Sollreifendruck anzugleichen, kann darüber hinaus der zusätzliche Energieverbrauch, welcher aufgrund des falsch eingestellten Reifendrucks anfällt, dargestellt werden. (z.B. "2 % (0,4 l/100 km) höherer Energieverbrauch aufgrund zu geringen Luftdrucks".) Darüber hinaus kann bei Überschreitung eines bestimmten Energieverbrauchs-Schwellenwerts eine Warnung für den Fahrer erzeugt werden, um den Fahrer vor dem falsch eingestellten Reifendruck zu warnen. Weiterhin kann der Fahrer vor einem Sicherheitsrisiko durch falschen Reifendruck gewarnt werden. Schließlich ist es erfindungsgemäß auch möglich, den Reifendruck des jeweiligen Reifens automatisch derart zu verändern, dass er dem Sollreifendruck entspricht.

Um eine Anpassung des Reifendrucks an den Sollreifendruck bei jeder Änderung der Radlast zu vermeiden, kann eine durchschnittliche, maximale oder typische Radlast für den jeweiligen Reifen bestimmt werden. In diesem Fall kann das Druckverhältnis $p_{rel}$ oder der Sollreifendruck $p_{Ideal}$ abhängig von dieser Radlast (und nicht von der jeweils aktuellen Radlast) bestimmt werden.

Zur Bestimmung der Reifensteifigkeit gibt es mehrere Möglichkeiten. Zum einen kann eine Reifensteifigkeitsfunktion vorgegeben werden, mit welcher abhängig von dem aktuellen Reifendruck, von der Geschwindigkeit des Fahrzeugs und der Radlast die Reifensteifigkeit bestimmt wird.

Wenn die vorab beschriebene Reifensteifigkeitsfunktion dem Fahrzeug nicht bekannt ist, kann die Reifensteifigkeitsfunktion rudimentär vorgegeben werden, wie es beispielhaft in der folgenden Gleichung (4) angegeben ist.

$$m = \frac{a}{f} \times \left( \frac{f}{p+k} \right)^n - b \times v \qquad (4).$$

Dabei entspricht m der Reifensteifigkeit, f der Radlast und v der Geschwindigkeit des Fahrzeugs. Bei a, b, k und n handelt es sich um Konstanten. Da die Konstante b in der Regel sehr klein ist, kann die Reifensteifigkeit m auch ohne den Term "b*v" bestimmt werden.

In diesem Fall werden die Konstanten anhand von Messwerten, welche für mehrere Zeitpunkte für die Radlast, den aktuellen Reifendruck und die Geschwindigkeit des Fahrzeugs ermittelt werden, derart erlernt oder bestimmt, dass die quadratische Norm eines Schätzfehlers minimiert wird. Dafür beobachtet beispielsweise ein Kalman-Filter (oder ein anderes geeignetes Filter) den Zusammenhang zwischen den gemessenen Werten über einen längeren Zeitraum. Für die vorgegebene Reifensteifigkeitsfunktion werden so die Konstanten bzw. Parameter bestimmt, was auch als Parameteridentifikation bezeichnet wird. Dabei ist es möglich, auch die Radlast oder den aktuellen Reifendruck quasi als Konstante bzw. Parameter anzusehen, so dass über die über den längeren Zeitraum gemessenen Messwerte nicht nur die Konstanten (z.B. a, b, k und n), sondern auch die Radlast bzw. der aktuelle Reifendruck bestimmt werden kann, ohne dass z.B. der Reifendruck explizit mittels eines Drucksensors erfasst werden muss. Mit anderen Worten erlernt das erfindungsgemäße Verfahren zuerst die Konstanten der Reifensteifigkeitsfunktion, bevor die Reifensteifigkeitsfunktion insbesondere zur Berechnung der Reifensteifigkeit eingesetzt werden kann. Im Falle eines Kalman-Filters bilden die zu bestimmenden Konstanten oder Parameter der Reifensteifigkeitsfunktion den so genannten Kalman-Systemzustandsvektor. Dieser Vektor wird mittels Einbringung der Messwerte mit der Zeit rekursiv geschätzt.

Erfindungsgemäß ist es auch möglich, die Reifensteifigkeit abhängig von einem Reifentyp des Reifens, also ohne Erfassen von Messwerten, zu bestimmen.

Bei dieser Alternative kann beispielsweise eine Datenbasis für die verschiedenen Reifentypen vorhanden sein, in welcher für jeden Reifentyp für bestimmte Reifendrücke und für bestimmte Geschwindigkeiten des Fahrzeugs die entsprechende Reifensteifigkeit angegeben ist. Durch die beispielsweise manuelle Vorgabe des Reifentyps kann dann abhängig von dem aktuellen Reifendruck, welcher beispielsweise im Stand gemessen wird, die jeweils gültige Reifensteifigkeit für den jeweiligen Reifen bestimmt werden.

Im Rahmen der vorliegenden Erfindung wird auch ein System zur Bestimmung eines Druckverhältnisses zwischen einem Sollreifendruck und einem aktuellen Reifendruck für einen Reifen eines Fahrzeugs bereitgestellt. Dabei ist das erfindungsgemäße System, welches eine Steuerung umfasst, ausgestaltet, um die Radlast und den dynamischen Reifenradius des jeweiligen Reifens zu ermitteln. Abhängig von der Radlast und von dem dynamischen Reifenradius bestimmt das erfindungsgemäße System dann mit Hilfe der Steuerung das Druckverhältnis.

Die Vorteile des erfindungsgemäßen Systems entsprechen im Wesentlichen den Vorteilen des erfindungsgemäßen Verfahrens, welche vorab im Detail ausgeführt sind, so dass hier auf eine Wiederholung verzichtet wird.

Das erfindungsgemäße System ist insbesondere zur Durchführung jeder Variante des erfindungsgemäßen Verfahrens ausgestaltet.

Darüber hinaus wird erfindungsgemäß ein Fahrzeug bereitgestellt, welches ein erfindungsgemäßes System umfasst.

Die vorliegende Erfindung ist für Kraftfahrzeuge, insbesondere Lastwagen, geeignet. Selbstverständlich ist die vorliegende Erfindung nicht auf diesen bevorzugten Anwendungsbereich eingeschränkt, da die vorliegende Erfindung auch bei Flugzeugen sowie spurgeführten Fahrzeugen eingesetzt werden kann.

Im Folgenden wird die vorliegende Erfindung anhand bevorzugter erfindungsgemäßer Ausführungsformen mit Bezug zu den Figuren im Detail beschrieben.

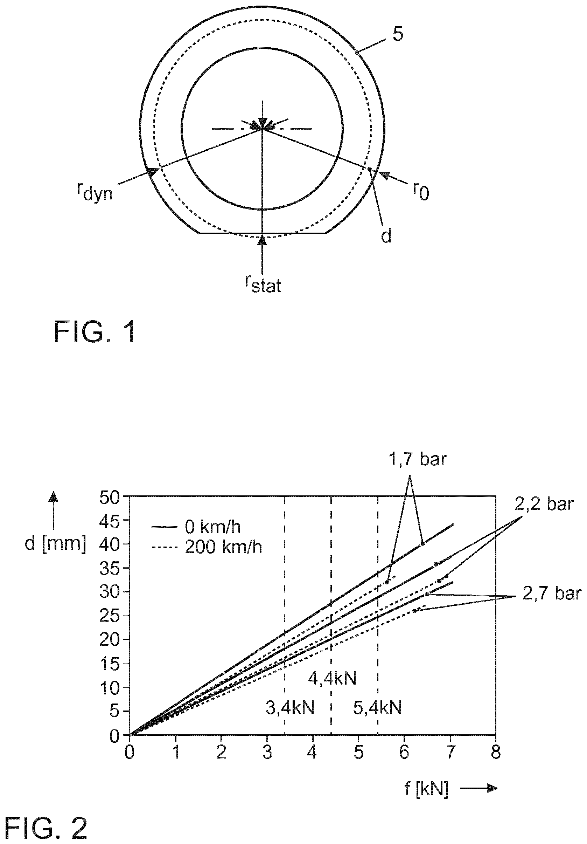

Mit Fig. 1 werden die Begriffe statischer, dynamischer und unbelasteter Reifenradius erläutert.

In Fig. 2 sind erfindungsgemäße Beispiele für die Reifensteifigkeit (Verhältnis zwischen der Differenz zwischen dynamischem und unbelastetem Reifenradius und der Radlast) dargestellt.

In Fig. 3 ist der Flussplan einer erfindungsgemäßen Ausführungsform zur Bestimmung des Druckverhältnisses zwischen Sollreifendruck und aktuellem Reifendruck dargestellt.

In Fig. 4 ist schematisch ein Fahrzeug mit einem erfindungsgemäßen System dargestellt.

In Fig. 1 ist ein Reifen 5 dargestellt, welcher einen statischen Reifenradius $r_{stat}$, einen dynamischen Reifenradius $r_{dyn}$ und einen unbelasteten Reifenradius $r_0$ aufweist. Der statische Reifenradius $r_{stat}$ bestimmt die kürzeste Entfernung zwischen der Mittelachse 6 des Reifens 5 und der Fahrbahn, auf der das Fahrzeug steht. Der dynamische Reifenradius $r_{dyn}$ kann anhand des Abrollumfangs des Reifens berechnet werden. Der unbelastete Reifenradius $r_0$ ist der größte am Reifen 5 zu messende Radius und entspricht demjenigen Reifenradius, welchen der Reifen 5 im unbelasteten Zustand (d.h. es wirkt keine Radlast auf den Reifen) annimmt. Zusammenfassend gilt folgende Ungleichung (5):

$$r_{stat} < r_{dyn} < r_0 \qquad\qquad (5)$$

Mit dem Bezugszeichen d ist die Differenz oder der Abstand zwischen dem unbelasteten Reifenradius $r_0$ und dem dynamischen Reifenradius $r_{dyn}$ bezeichnet.

In Fig. 2 ist die annähernd lineare Beziehung bzw. das Verhältnis m zwischen der Differenz d und der auf das jeweilige Rad 5 einwirkenden Radlast f für einen bestimmten Reifen bzw. Reifentyp dargestellt. Man erkennt, dass das Verhältnis m bzw. die Beziehung zwischen d und f von dem aktuellen Reifendruck und von der Geschwindigkeit, mit der das Fahrzeug fährt, abhängt. In Fig. 2 ist das Verhältnis m für die Drücke 1,7 bar, 2,2 bar und 2,7 bar und jeweils für eine Geschwindigkeit von 0 km/h (d.h. für den Stillstand) und für eine Geschwindigkeit von 200 km/h angegeben.

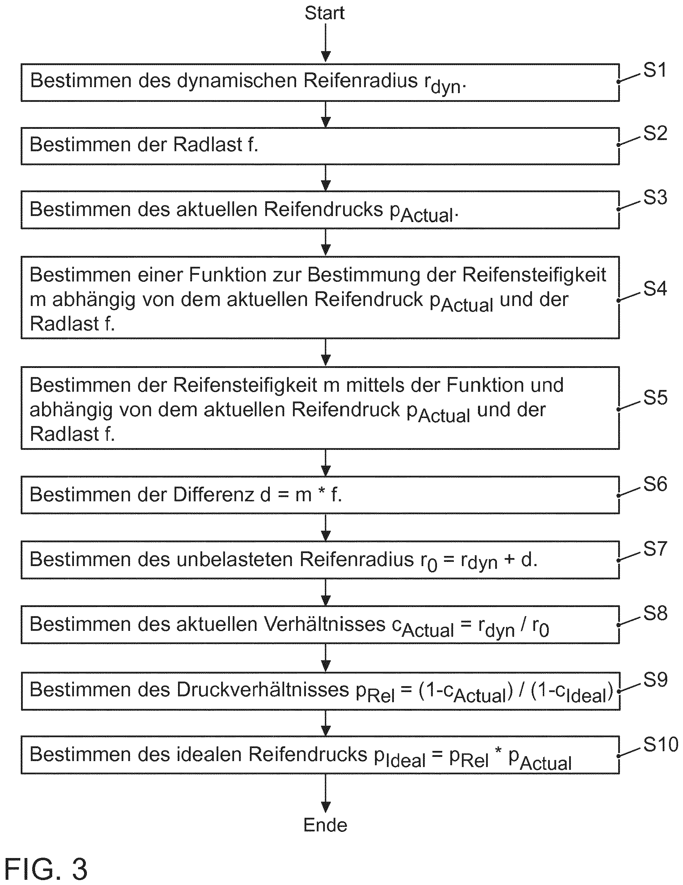

In Fig. 3 ist ein Flussplan eines erfindungsgemäßen Verfahrens zur Bestimmung des Druckverhältnisses $p_{Rel}$ und zur Bestimmung des idealen Reifendrucks $p_{Ideal}$ dargestellt.

Im ersten Schritt S1 wird der dynamische Reifenradius $r_{dyn}$ bestimmt. Allgemein gilt, je niedriger der Reifendruck und je höher die Radlast, desto mehr wird der jeweilige Reifen im Bereich, in welchem der Reifen die Fahrbahn berührt, verformt (d.h. desto größer ist der Unterschied zwischen dem dynamischen Reifenradius $r_{dyn}$ und dem unbelasteten Reifenradius $r_0$ und demnach die Differenz d).

Im zweiten Schritt S2 wird die auf den jeweiligen Reifen einwirkende Radlast f bestimmt. Die Radlast f kann dabei mit entsprechenden Sensoren, welche beispielsweise bei einer Luftfederung den Luftdruck innerhalb des entsprechenden Federelements messen, erfasst werden. Bei einer herkömmlichen Federung des Fahrzeugs kann die Radlast f anhand der Auslenkung des entsprechenden Federelements erfasst werden.

Wenn keine entsprechenden Sensoren vorhanden sind, kann die auf den jeweiligen Reifen einwirkende Radlast f manuell beispielsweise vom Fahrer des Fahrzeugs eingegeben werden. Dabei sind Vereinfachungen möglich, indem beispielsweise nur eine Last pro Achse des Fahrzeugs vorgegeben wird und eine symmetrische Lastverteilung vorausgesetzt wird, so dass die vorgegebene Achslast hälftig auf den jeweiligen Reifen einwirkt.

Im dritten Schritt S3 wird der aktuelle Reifendruck des jeweiligen Reifens beispielsweise anhand von im Reifen eingebauten Drucksensoren erfasst. Dieser Schritt S3 ist optional und ist insbesondere erforderlich, wenn ein absoluter Wert für den Sollreifendruck berechnet werden soll. Ohne diesen Schritt S3 kann immer noch erfindungsgemäß ein relativer Reifendruck $p_{rel}$ bestimmt werden. Der relative Reifendruck $p_{rel}$ ermöglicht Angaben wie beispielsweise, dass der Reifendruck des jeweiligen Reifens um 10 % zu hoch oder zu tief ist.

Im vierten Schritt S4 wird eine Reifensteifigkeitsfunktion bestimmt, mit deren Hilfe die Reifensteifigkeit m (Verhältnis zwischen der Differenz zwischen dem dynamischen Reifenradius $r_{dyn}$ und dem unbelasteten Reifenradius $r_0$ und der auf den jeweiligen Reifen einwirkenden Radlast f) abhängig von der Radlast, dem Reifendruck und der Geschwindigkeit des Fahrzeugs bestimmt werden kann.

Dazu werden für jeden Reifen des Fahrzeugs über eine bestimmte Zeitspanne hinweg für die Radlast und die Geschwindigkeit Messwerte erfasst oder ermittelt. Wenn der aktuelle Reifendruck ebenfalls vorliegt, werden entsprechende Messwerte zusätzlich erfasst.

Beispielsweise mit Hilfe eines Kalman-Filters (oder eines ähnlichen Ansatzes) können dann im Vorfeld die Konstanten oder Parameter einer Funktion $m = \text{func}(f, p, v)$ anhand der vorab erfassten Messwerte bestimmt werden. Die z.B. mittels des Kalman-Filters abgeschätzten Parameter beschreiben bestimmte Eigenschaften des jeweiligen Reifens oder Reifentyps und definieren die Reifensteifigkeitsfunktion, so dass für die Variablen Radlast f, Reifendruck p und Geschwindigkeit v das Verhältnis m bestimmt werden kann.

Alternativ kann die Funktion auch in Form einer Datenbasis bereitgestellt werden, in welcher für die verschiedensten Reifentypen jeweils die vorab beschriebene Funktion, mit deren Hilfe die Reifensteifigkeit abhängig von der Radlast, von dem Reifendruck und der Fahrzeuggeschwindigkeit berechnet werden kann, hinterlegt ist. Darüber hinaus besteht die Möglichkeit, die Daten, mit welchen die Reifensteifigkeitsfunktion beschrieben wird, beispielsweise auf einem RFID-Tag direkt im oder am Reifen zu hinterlegen und diese Daten berührungslos auszulesen.

Sobald diese Funktion bekannt oder bestimmt ist, kann im nächsten Schritt S5 die Reifensteifigkeit m abhängig von der Radlast f und von dem Reifendruck $p_{Actual}$ mittels der Reifensteifigkeitsfunktion bestimmt werden. Im folgenden Schritt S6 ergibt sich die Differenz d aus dem Produkt der Reifensteifigkeit m und der Radlast f. Anhand der Differenz d kann im nächsten Schritt S7 der unbelastete Reifenradius $r_0$ durch eine Addition des dynamischen Reifenradius $r_{dyn}$ mit der Differenz d berechnet werden.

Da nun der dynamische Reifenradius $r_{dyn}$ und der unbelastete Reifenradius $r_0$ bekannt sind, kann im folgenden Schritt S8 das Verhältnis $c_{Actual}$ bestimmt werden. Anhand dieses Verhältnisses kann bei Kenntnis des Sollverhältnisses $c_{Ideal}$ im Schritt S9 das relative Druckverhältnis $p_{Rel}$ bestimmt werden, so dass schließlich im Schritt S10 der ideale Reifendruck $p_{Ideal}$ durch das Produkt aus dem relativen Druckverhältnis $p_{Rel}$ und dem aktuellen Reifendruck $p_{Actual}$ berechnet werden kann.

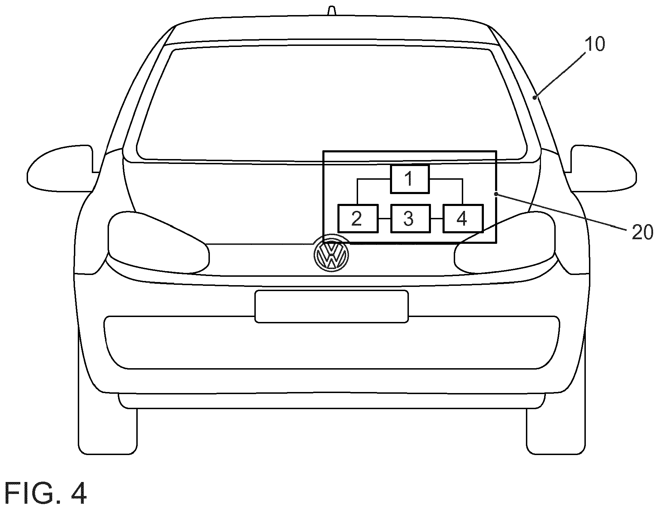

Fig. 4 ist schematisch ein erfindungsgemäßes Fahrzeug mit einem erfindungsgemäßen System 20 dargestellt. Das erfindungsgemäße System 20 umfasst eine Steuerung 1, einen Reifendrucksensor 2, einen Kraftsensor 3 und einen Geschwindigkeitssensor 4.

Bezugszeichenliste

| | |
|---|---|
| 1 | Steuerung |
| 2 | Reifendrucksensor |
| 3 | Kraftsensor |
| 4 | Geschwindigkeitssensor |
| 5 | Reifen |
| 6 | Reifenmittelachse |
| 10 | Fahrzeug |
| 20 | System |
| $c_{Actual}$ | Verhältnis zwischen dynamischen Reifenradius und unbelasteten Reifenradius |
| $c_{Ideal}$ | optimales Verhältnis zwischen dynamischen Reifenradius und unbelasteten Reifenradius |
| d | Differenz $(r_0 - r_{dyn})$ |
| f | Radlast |
| m | Reifensteifigkeit |
| $p_{Actual}$ | aktueller Reifendruck |
| $p_{Ideal}$ | Sollreifendruck |
| $p_{Rel}$ | Druckverhältnis |
| $r_0$ | Reifenradius im unbelasteten Zustand |
| $r_{dyn}$ | dynamischer Reifenradius |
| $r_{stat}$ | statischer Reifenradius |
| $S_1$-$S_{10}$ | Verfahrensschritt |

**Patentansprüche**

1. Verfahren zur Bestimmung eines Druckverhältnisses ($p_{Rel}$) zwischen einem Sollreifendruck ($p_{Ideal}$) und einem aktuellen Reifendruck ($p_{Actual}$) für einen Reifen (5) eines Fahrzeugs (10), die Schritte umfassend:

Bestimmen einer Radlast (f), welche auf den Reifen (5) einwirkt,

Ermitteln eines dynamischen Reifenradius ($r_{dyn}$) des Reifens (5), und

Bestimmen des Druckverhältnisses ($p_{Rel}$ abhängig von der Radlast (f) und dem dynamischen Reifenradius ($r_{dyn}$).

2. Verfahren nach Anspruch 1, **dadurch gekennzeichnet, dass** das Bestimmen des Druckverhältnisses weiter in Abhängigkeit von einer Konstante des Reifens (5), welche ein Sollverhältnis ($c_{Ideal}$) zwischen dem dynamischen Reifenradius ($r_{dyn}$) und dem unbelasteten Reifenradius ($r_0$) angibt, erfolgt.

3. Verfahren nach Anspruch 2,
**dadurch gekennzeichnet,**
**dass** das Druckverhältnis ($p_{Rel}$ anhand folgender Gleichung (1) berechnet wird:

$$p_{Rel} = (1 - c_{Actual}) / (1 - c_{Ideal}) \qquad (1),$$

wobei $p_{Rel}$ das Druckverhältnis, $c_{Actual}$ das Verhältnis zwischen dem dynamischen Reifenradius ($r_{dyn}$) und dem unbelasteten Reifenradius ($r_0$) und $C_{Ideal}$ die vorgegebene Konstante des Reifens (5) ist.

4. Verfahren nach einem der vorhergehenden Ansprüche,
**gekennzeichnet durch**
Bestimmen des aktuellen Reifendrucks ($p_{Actual}$) des Reifens (5), und
Bestimmen eines Sollreifendrucks ($p_{Ideal}$) des Reifens (5), indem das Druckverhältnis ($p_{Rel}$) mit dem aktuellen Reifendruck ($p_{Actual}$) multipliziert wird.

5. Verfahren nach einem der vorhergehenden Ansprüche,
**gekennzeichnet durch**
Bestimmen einer Reifensteifigkeit (m),
Bestimmen einer Differenz (d) zwischen einem unbelasteten Reifenradius ($r_0$) des Reifens (5) im unbelasteten Zustand und dem dynamischen Reifenradius ($r_{dyn}$) abhängig von der Radlast (f) und der Reifensteifigkeit (m), und
Bestimmen des unbelasteten Reifenradius ($r_0$) aus einer Summe aus dem dynamischen Reifenradius ($r_{dyn}$) und der Differenz (d).

6. Verfahren nach Anspruch 5,
**gekennzeichnet durch**
Vorgeben einer Reifensteifigkeitsfunktion,
Erfassen eines Reifendrucks ($p_{Actual}$) des Reifens (5),
Bestimmen einer Geschwindigkeit des Fahrzeugs (10), und
Bestimmen der Reifensteifigkeit (m) anhand der Reifensteifigkeitsfunktion abhängig von dem Reifendruck ($p_{Actual}$), der Geschwindigkeit und der Radlast (f).

7. Verfahren nach Anspruch 5,
**gekennzeichnet durch**
Erfassen von Messwerten der aktuellen Radlast (f) und der aktuellen Geschwindigkeit des Fahrzeugs (10) zu verschiedenen Zeitpunkten,
Bestimmen einer Reifensteifigkeitsfunktion, welche die Reifensteifigkeit (m) abhängig von der Geschwindigkeit, der Radlast (f) und dem Reifendruck ($p_{Actual}$) angibt, anhand der zu den verschiedenen Zeitpunkten erfassten Messwerte, und
Bestimmen der Reifensteifigkeit abhängig von der Reifensteifigkeitsfunktion.

8. System zur Bestimmung eines Druckverhältnisses ($p_{Rel}$ zwischen einem Sollreifendruck ($p_{Ideal}$) und einem aktuellen Reifendruck ($p_{Actual}$) für einen Reifen (5) eines Fahrzeugs (10), wobei das System (20) eine Steuerung (1) umfasst, wobei das System (20) ausgestaltet ist, um eine Radlast (f), welche auf den Reifen (5) einwirkt, zu bestimmen und um einen dynamischen Reifenradius ($r_{dyn}$) des Reifens (5) zu ermitteln, und wobei das System (20) ausgestaltet ist, um mittels der Steuerung (1) das Druckverhältnis ($p_{Rel}$ abhängig von der Radlast (f) und von dem dynamischen Reifenradius ($r_{dyn}$) zu bestimmen.

9. System nach Anspruch 8, **dadurch gekennzeichnet, dass** das System (20) zur Durchführung des Verfahrens nach einem der Ansprüche 1-7 ausgestaltet ist.

**Claims**

1. Method for determining a pressure ratio ($p_{Rel}$) between a target tyre pressure ($p_{Ideal}$) and a current tyre pressure ($p_{Curr}$) for a tyre (5) of a vehicle (10), comprising the steps of:
determining a wheel load (f) which acts on the tyre (5), acquiring a dynamic tyre radius ($r_{dyn}$) of the tyre (5) and determining the pressure ratio ($p_{Rel}$) in accordance with the wheel load (f) and the dynamic tyre radius ($r_{dyn}$).

2. Method according to Claim 1, **characterized in that** the determination of the pressure ratio is also carried out in accordance with a constant of the tyre (5) which indicates a target ratio ($c_{Ideal}$) between the dynamic tyre radius ($r_{dyn}$) and the non-loaded tyre radius ($r_0$).

3. Method according to Claim 2,
**characterized**
**in that** the pressure ratio ($p_{Rel}$) is calculated using the following equation (1):

$$p_{Rel} = (1 - c_{Curr})/(1 - c_{Ideal}) \qquad (1),$$

where $p_{Rel}$ is the pressure ratio, $c_{Curr}$ is the ratio between the dynamic tyre radius ($r_{dyn}$) and the non-loaded tyre radius ($r_0$) and $C_{Ideal}$ is the specified constant of the tyre (5).

4. Method according to one of the preceding claims,
**characterized by**
determining the current tyre pressure ($p_{Curr}$) of the tyre (5), and
determining a target tyre pressure ($p_{Ideal}$) of the tyre (5) by multiplying the pressure ratio ($p_{Rel}$) by the current tyre pressure ($p_{Curr}$).

5. Method according to one of the preceding claims,
**characterized by**
determining a tyre rigidity (m),
determining a difference (d) between a non-loaded tyre radius ($r_0$) of the tyre (5) in the non-loaded state and the dynamic tyre radius ($r_{dyn}$) in accordance with the wheel load (f) and the tyre rigidity (m), and determining the non-loaded tyre radius ($r_0$) from a sum of the dynamic tyre radius ($r_{dyn}$) and the difference (d).

6. Method according to Claim 5,
**characterized by**
specifying a tyre rigidity function,
detecting a tyre pressure ($p_{Curr}$) of the tyre (5), determining a speed of the vehicle (10), and determining the tyre rigidity (m) on the basis of the tyre rigidity function in accordance with the tyre pressure ($p_{Curr}$), the speed and the wheel load (f).

7. Method according to Claim 5,
**characterized by**
detecting measured values of the current wheel load (f) and of the current speed of the vehicle (10) at various times, determining a tyre rigidity function which specifies the tyre rigidity (m) in accordance with the speed, the wheel load (f) and the tyre pressure ($p_{Curr}$), on the basis of the measured values detected at the various times, and determining the tyre rigidity in accordance with the tyre rigidity function.

8. System for determining a pressure ratio ($p_{Rel}$) between a target tyre pressure ($p_{Ideal}$) and a current tyre pressure ($p_{Curr}$) for a tyre (5) of a vehicle (10), wherein the system (20) comprises a controller (1), wherein the system (20) is configured to determine a wheel load (f) which acts on the tyre (5), and to acquire a dynamic tyre radius ($r_{dyn}$) of the tyre (5), and wherein the system (20) is configured to determine the pressure ratio ($p_{Rel}$) in accordance with the wheel load (f) and the dynamic tyre radius ($r_{dyn}$) by means of the controller (1).

9. System according to Claim 8, **characterized in that** the system (20) is configured to carry out the method according to one of Claims 1-7.

**Revendications**

1. Procédé de détermination d'un rapport de pression ($p_{Rel}$) entre une pression de pneumatique de consigne ($p_{Idéal}$) et une pression de pneumatique actuelle ($p_{Actuel}$) pour un pneumatique (5) d'un véhicule (10), le procédé comprenant les étapes suivantes :
   déterminer une charge de roue (f) qui agit sur le pneumatique (5),
   déterminer un rayon de pneumatique dynamique ($r_{dyn}$) du pneumatique (5), et
   déterminer le rapport de pression ($p_{Rel}$) en fonction de la charge de roue (f) et du rayon de pneumatique dynamique ($r_{dyn}$) .

2. Procédé selon la revendication 1, **caractérisé en ce que** la détermination du rapport de pression est effectuée en outre en fonction d'une constante du pneumatique (5) qui indique un rapport de consigne ($c_{Idéal}$) entre le rayon de pneumatique dynamique ($r_{dyn}$) et le rayon de pneumatique non chargé ($r_0$).

3. Procédé selon la revendication 2,
   **caractérisé en ce que**
   le rapport de pression ($p_{Rel}$) est calculé à l'aide de l'équation suivante (1) :

$$p_{Rel} = (1 - c_{Actuel}) / (1 - c_{Idéal}) \qquad\qquad (1),$$

   $p_{Rel}$ étant le rapport de pression, $c_{Actuel}$ étant le rapport entre le rayon de pneumatique dynamique ($r_{dyn}$) et le rayon de pneumatique non chargé ($r_0$) et $C_{Idéal}$ étant la constante spécifiée du pneumatique (5).

4. Procédé selon l'une des revendications précédentes,
   **caractérisé par** les étapes suivantes
   déterminer la pression de pneumatique actuelle ($p_{Actuel}$) du pneumatique (5), et
   déterminer une pression de pneumatique de consigne ($p_{Idéal}$) du pneumatique (5) par multiplication du rapport de pression ($p_{Rel}$) par la pression de pneumatique actuelle ($P_{Actuel}$).

5. Procédé selon l'une des revendications précédentes,
   **caractérisé par** les étapes suivantes
   déterminer une rigidité de pneumatique (m),
   déterminer une différence (d) entre un rayon de pneumatique non chargé ($r_0$) du pneumatique (5) à l'état non chargé et le rayon de pneumatique dynamique ($r_{dyn}$) en fonction de la charge de roue (f) et de la rigidité de pneumatique (m), et
   déterminer le rayon de pneumatique non chargé ($r_0$) à partir de la somme du rayon de pneumatique dynamique ($r_{dyn}$) et de la différence (d) .

6. Procédé selon la revendication 5,
   **caractérisé par** les étapes suivantes
   spécifier une fonction de rigidité de pneumatique, détecter une pression de pneumatique ($p_{Actuel}$) du pneumatique (5),
   déterminer une vitesse du véhicule (10), et
   déterminer la rigidité de pneumatique (m) sur la base de la fonction de rigidité de pneumatique en fonction de la pression de pneumatique ($p_{Actuel}$), de la vitesse et de la charge de roue (f).

7. Procédé selon la revendication 5,
   **caractérisé par** les étapes suivantes
   acquérir des valeurs de mesure de la charge de roue actuelle (f) et de la vitesse actuelle du véhicule (10) à des instants différents,
   déterminer une fonction de rigidité de pneumatique qui indique la rigidité de pneumatique (m) en fonction de la vitesse, de la charge de roue (f) et de la pression de pneumatique ($p_{Actuel}$), sur la base des valeurs de mesure acquises aux différents instants, et
   déterminer la rigidité de pneumatique en fonction de la fonction de rigidité de pneumatique.

8. Système de détermination d'un rapport de pression ($p_{Rel}$) entre une pression de pneumatique de consigne ($p_{Idéal}$)

et une pression de pneumatique actuelle ($p_{Actual}$) d'un pneumatique (5) d'un véhicule (10), le système (20) comprenant une commande (1),

le système (20) étant conçu pour déterminer une charge de roue (f) qui agit sur le pneumatique (5) et pour déterminer un rayon de pneumatique dynamique ($r_{dyn}$) du pneumatique (5), et

le système (20) étant conçu pour déterminer le rapport de pression ($p_{Rel}$) en fonction de la charge de roue (f) et du rayon de pneumatique dynamique ($r_{dyn}$) au moyen de la commande (1).

9. Système selon la revendication 8, **caractérisé en ce que** le système (20) est conçu pour mettre en œuvre le procédé selon l'une des revendications 1 à 7.

FIG. 1

FIG. 2

Start

Bestimmen des dynamischen Reifenradius $r_{dyn}$. — S1

Bestimmen der Radlast f. — S2

Bestimmen des aktuellen Reifendrucks $p_{Actual}$. — S3

Bestimmen einer Funktion zur Bestimmung der Reifensteifigkeit m abhängig von dem aktuellen Reifendruck $p_{Actual}$ und der Radlast f. — S4

Bestimmen der Reifensteifigkeit m mittels der Funktion und abhängig von dem aktuellen Reifendruck $p_{Actual}$ und der Radlast f. — S5

Bestimmen der Differenz $d = m * f$. — S6

Bestimmen des unbelasteten Reifenradius $r_0 = r_{dyn} + d$. — S7

Bestimmen des aktuellen Verhältnisses $c_{Actual} = r_{dyn} / r_0$ — S8

Bestimmen des Druckverhältnisses $p_{Rel} = (1-c_{Actual}) / (1-c_{Ideal})$ — S9

Bestimmen des idealen Reifendrucks $p_{Ideal} = p_{Rel} * p_{Actual}$ — S10

Ende

# FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030121319 A1
- JP 2010076702 A
- DE 102009057578 A1
- DE 102009057579 A1
- DE 10352539 B4
- DE 102006020490 A1